# EUROPEAN PATENT SPECIFICATION

(11) **EP 1 273 838 B1**
(45) Date of publication and mention of the grant of the patent: **13.10.2004**
(21) Application number: 01202591.2
(22) Date of filing: 05.07.2001
(51) Int. Cl.: F16K 27/02

(54) **System of polygonal coupling between the body of a butterfly valve and the support of the control spindle**
Polygonale Kupplung zwischen dem Gehäuse eines Klappventils und der Stütze der Steuerwelle
Accouplement polygonal entre le corps de robinet à papillon et le support d'arbre de commande

(43) Date of publication of application: 08.01.2003
(73) Proprietor: Lardieri, Salvatore, 55010 Spianate-Altopascio (LU) (IT)
(72) Inventor: Lardieri, Salvatore, 55010 Spianate-Altopascio (LU) (IT)
(74) Representative: Fiammenghi-Domenighetti, Delfina

(56) References cited:
- EP-A- 0 105 218
- EP-A- 0 942 212
- DE-A- 2 615 041
- DE-A- 3 546 086
- US-A- 4 134 175

## Description

The invention relates to the support of the control spindle of a butterfly valve, which support is held nonrotatably in the two half-bodies of the valve when the latter are brought together and joined rigidly upon completion of the assembly of the said valve.

In butterfly valves at present, the support for the control spindle is of circular section, and the corresponding hole in the valve body is of course also circular. The rigidity of this coupling is ensured by pins mounted in the valve body and introduced into special housings formed in the support, or vice versa. These pins not only prevent the support from slipping inside the valve body when the shutter is being opened and closed, but also ensure that there can be no outward axial displacement of the support. There are both technical and hygiene problems with this approach because the action of the twisting moment due to friction of the spindle on the support when the shutter is being operated is absorbed by the pins only, and these can give. Also, the cavities recessed into the support to take the pins are traps for possible deposits which are difficult to completely remove when cleaning the apparatus.

The object of the present invention is to eliminate these problems.
The invention, as characterized by the claims, solves the difficulty by greatly increasing the lines of opposition to the twisting moment and having no deep housings so that there is almost no possibility of matter being deposited, and what there is can easily be removed when cleaning the valve.

All this is made possible by the fact that the outer surface of the support has a polygonal configuration, as has the housing formed in the two half-bodies of the valve.

Patents EP 0 105 218A which should be considered as the closest state of the art describes a coupling between the body of a butterfly valve and the support of the relating control spindle which corresponds to the preamble of claim 1 wherein some parts are designed so as to obtain the same results pursued by the present invention, but the shape of many components and their disposition, as it will be explained, are different, and do not allow to reach the same advantages.

The invention is described in greater detail below with the help of the drawings, which show an example of an embodiment thereof.

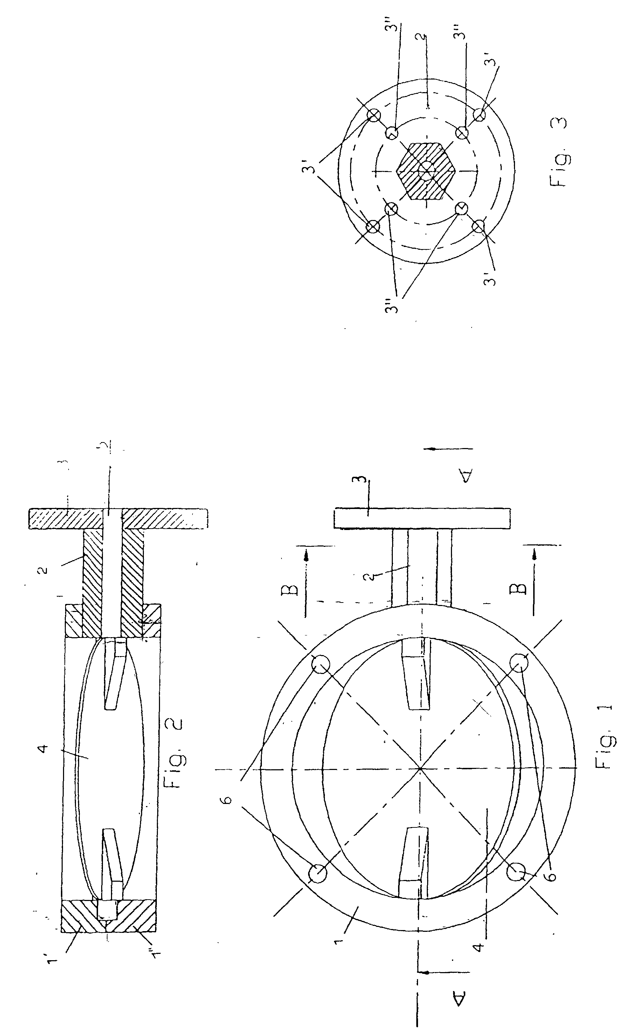

Fig. 1 shows a view of the valve with the body (1), the support (2) for the control spindle, the flange (3) and the shutter (4) in evidence. Fig. 2 shows a section through the valve with the two half-bodies (1') and (1''), the support (2), the flange (3), the shutter (4) and the control spindle (5) in evidence. The two half-bodies are held together by, for example, the screws (6). Fig. 3 shows a section through the hexagonal-profile support (2), and an external view of the flange (3), with the holes (3') for attachment to an actuator and the holes (3'') for attachment to a lever for hand operation in evidence.

A hexagonal profile is proposed for the support (2) because that is the most likely, but it is perfectly possible for the profile of the support to be triangular or quadrangular, or polygonal in general.

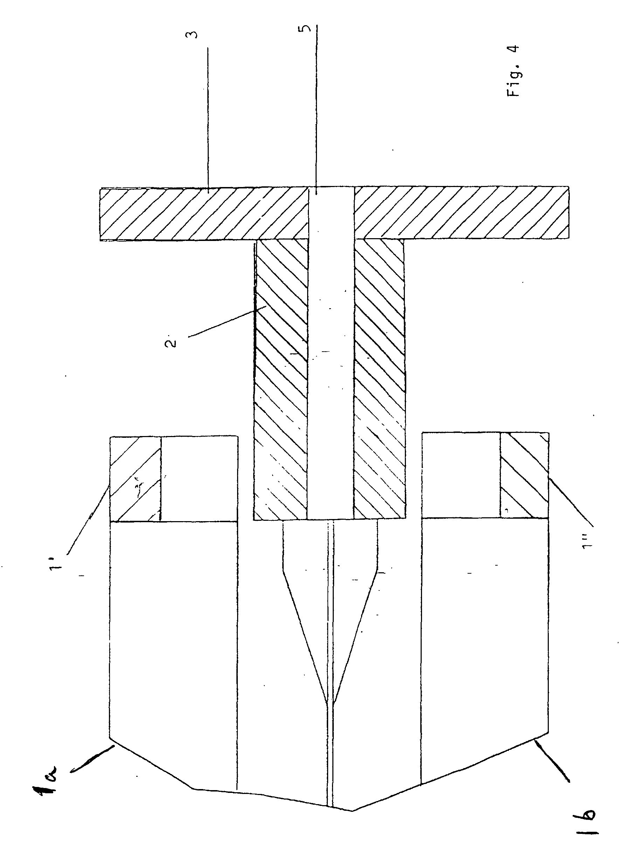

Figure 4 depicts a cross section through the valve before assembly, in an enlarged representation compared with that shown in Fig. 2, illustrating not only the already known parts but also the housings (1a) and (1b) in the two half-bodies (1') and (1''), and the taper of the support (2) and of the housings.

Operation is obvious because the polygonal configuration of the outer surface of the support (2) prevents any possibility of its slipping inside the valve body; and the taper of the surfaces prevents any possibility of the support (2) coming out.

Finally, the absence of cavities prevents the build-up of deposits of matter and makes it easier to clean the support (2) and its housing in the valve body.

## Claims

1. System comprising a polygonal coupling between the body of a butterfly valve (4) and the support (2) of the control spindle (5) which is held nonrotatably in the two half-bodies (1', 1") of the valve when the latter are brought together and joined rigidly upon completion of the assembly of the said valve, the outer surface of the support (2) of the control spindle (5) and the parts of the two half-bodies (1', 1") which hold the support having a polygonal configuration, **characterized in that** the said support (2) assumes the configuration of a frustum of a polygonal pyramid because of the taper of its lateral surfaces.

2. System according to Claim 1, **characterized, in that** when the two half-bodies (1', 1") of the valve are assembled, they that it assume the configuration of a frustum of a polygonal pyramid.

## Patentansprüche

1. System mit einer vieleckigen Kupplung zwischen dem Körper eines Drosselklappenventils (4) und der Halterung (2) der Steuerspindel (5), die in den beiden Halbkörpern (1', 1") des Ventils nicht drehbar gehalten wird, wenn diese zusammengebracht und nach Vervollständigung des Zusammenbaus des Ventils miteinander fest verbunden werden, wobei die Außenfläche der Halterung (2) der Steuerspindel (5) und die Teile der beiden Halbkörper (1', 1 "), die die Halterung halten, eine vieleckige Konfiguration besitzen,
**dadurch gekennzeichnet,**
**dass** die Halterung (2) in Folge der Verjüngung ihrer Seitenflächen die Konfiguration eines Stumpfes einer vieleckigen Pyramide annimmt.

2. System nach Anspruch 1,
**dadurch gekennzeichnet,**
**dass** die beiden Halbkörper (1', 1 ") des Ventils, wenn sie zusammengebaut sind, die Konfiguration des Stumpfes einer vieleckigen Pyramide annehmen.

## Revendications

1. Système comprenant un couplage polygonal entre le corps d'une vanne papillon (4) et le support (2) de la tige de commande (5) qui est maintenue de manière à ne pas pouvoir tourner dans les deux demi-corps (1', 1'') de la vanne lorsque ces derniers sont assemblés et réunis de manière rigide à la fin du montage de ladite vanne, la surface extérieure du support (2) de la tige de commande (5) et les parties des deux demi-corps (1', 1") maintenant le support ayant une configuration polygonale, **caractérisé en ce que** ledit support (2) prend la configuration d'un tronc de cône de pyramide polygonale du fait de l'effilement de ses surfaces latérales.

2. Système selon la revendication 1, **caractérisé en ce que** lorsque les deux demi-corps (1', 1'') de la vanne sont assemblés, ils prennent la configuration d'un tronc de cône de pyramide polygonale.
